Europäisches Patentamt

European Patent Office

Office européen des brevets

(19)

(11) Veröffentlichungsnummer: **0 379 674**
**A2**

(12) # EUROPÄISCHE PATENTANMELDUNG

(21) Anmeldenummer: 89121806.7

(51) Int. Cl.⁵: **C09D 11/00**

(22) Anmeldetag: 25.11.89

(30) Priorität: 26.01.89 DE 3902225

(43) Veröffentlichungstag der Anmeldung:
01.08.90 Patentblatt 90/31

(84) Benannte Vertragsstaaten:
**AT DE FR GB IT NL**

(71) Anmelder: **HÜLS AKTIENGESELLSCHAFT**
**Patentabteilung / PB 15 - Postfach 13 20**
**D-4370 Marl 1(DE)**

(72) Erfinder: **Duismann, Werner, Dr.**
**Kiebeck 2**
**D-4270 Dorsten(DE)**
Erfinder: **Rennwanz, Peter**
**Johannes-Grüter-Strasse 15**
**D-4358 Haltern(DE)**

(54) Verfahren zur Kennzeichnung von saugfähigem Material mit einer thermisch stabilen Farbe.

(57) Die Kennzeichnung von saugfähigem Material, insbesondere von Stückgütern aus Keramik, soll sofort und auch noch nach einer thermischen Behandlung bei Temperaturen oberhalb von 400 °C lesbar sein.

Die Kennzeichnung von saugfähigem Material erfolgt durch Aufbringen einer Kobaltsalzlösung, die zusätzlich Kupfersalz enthalten kann, woran sich eine thermische Nachbehandlung oberhalb einer Temperatur von 400 °C zur Stabilisierung der Kennzeichnung anschließt.

Kennzeichnung von saugfähigem Material, insbesondere von Stückgütern aus Keramik, mit einer thermisch stabilen Farbe.

EP 0 379 674 A2

## Verfahren zur Kennzeichnung von saugfähigem Material mit einer thermisch stabilen Farbe

Die Erfindung betrifft ein Verfahren zur Kennzeichnung von saugfähigem Material mit einer thermisch stabilen Farbe.

Des weiteren betrifft die Erfindung die Verwendung einer Kobaltsalzlösung als thermisch stabile Farbe zur Kennzeichnung von saugfähigem Material.

Die Kennzeichnung von Materialien mit saugfähigem Untergrund ist bei der industriellen Fertigung von allgemeiner Bedeutung.

Insbesondere die Kennzeichnung von Stückgütern während des Produktionsablaufes ist vielfach Stand der Technik. Sie hat für den Hersteller u. a. den Vorteil der besseren Fertigungskontrolle gegenüber einer Beschriftung der Endprodukte.

Aber auch der Anwender des Produktes hat Vorteile durch eine dauerhafte Kennzeichnung, z. B. beim Zuordnen von Einzelstucken zu Lieferanten und Feststellen von Lieferzeiten.

Für die Beschriftung größerer Flächen mit saugfähigem Untergrund, z. B. Papier, Holz, Keramik, werden in der Technik häufig Tintenstrahldrukker eingesetzt. Hierfür und für technisch gleichartige Systeme steht eine große Anzahl von geeigneten Farben unterschiedlicher Hersteller zur Verfügung. Dabei handelt es sich um lösliche organische Farbstoffe, die thermisch ungenügend stabil sind.

Suspensionen von Farbpigmenten können bei dieser Kennzeichnungstechnik wegen der verwendeten Geräte nicht eingesetzt werden.

Es ist bekannt, gemäß JP-OS Sho 60/49073 und JP-AS 75/6802 Kobaltthiocyanat-Lösungen als blaue, mit Wasser zu entfernende Tinten zu verwenden. JP-OS Sho 63/30572 offenbart die Verwendung von Kupfer- oder Kobalt-Chelat-Komplexen als Tinten.

Der Erfindung liegt die Aufgabe zugrunde, ein Verfahren zur Kennzeichnung von saugfähigem Material mit einer thermisch stabilen Farbe zu entwickeln, die in homogener Lösung vorliegt, nach dem Aufbringen zur Verfolgung des Produktes bzw. Zwischenproduktes sofort lesbar und auch noch nach einer thermischen Behandlung bei Temperaturen von größer als 400 °C lesbar ist.

Es wurde nun gefunden, daß man durch Aufbringen einer Kobaltsalzlösung auf das saugfähige Material eine Kennzeichnung von violetter Farbe mit ausgezeichneter Farbdichte erhält, die nach der thermischen Behandlung bei Temperaturen von größer als 400 °C schwarz wird. Es entsteht das bekannte "Kobaltschwarz".

Gegenstand der vorliegenden Erfindung ist daher ein Verfahren zur Kennzeichnung von saugfähigem Material mit einer thermisch stabilen Farbe, das dadurch gekennzeichnet ist, daß man eine Kobaltsalzlösung auf das saugfähige Material aufbringt und die so aufgebrachte Kennzeichnung durch eine thermische Nachbehandlung bei Temperaturen von größer als 400 °C stabilisiert.

Des weiteren ist Gegenstand der vorliegenden Erfindung die Verwendung einer Kobaltsalzlösung nach den Ansprüchen 1 bis 5 als thermisch stabile Farbe zur Kennzeichnung von saugfähigem Material.

Als Kobaltsalz wird vorzugsweise Kobaltacetat eingesetzt.

Je nach Färbung des Untergrundes kann es empfehlenswert sein, zusätzlich ein Kupfersalz, vorzugsweise Kupferacetat, beizufügen, d. h. die Kobaltsalzlösung enthält zusätzlich Kupfersalz. Hierdurch wird auch die Stabilität der Farbe gegen Säureeinwirkung erhöht.

Zur Herstellung der Kobaltsalzlösung, die zusätzlich Kupfersalz enthalten kann, sind die verschiedensten Lösungsmittel, wie z. B. Wasser, Methanol, Ethanol oder Aceton, geeignet. Vorzugsweise bringt man eine wäßrige Kobaltsalzlösung auf das saugfähige Material auf.

In Abhängigkeit von der Saugfähigkeit des Materials kann es nützlich sein, die Viskosität der lösung durch einen geeigneten Stoff zu erhöhen. Man bringt also eine Kobaltsalzlösung, die zusätzlich einen Stoff, vorzugsweise Methylceliulose, zur Viskositätserhöhung der Lösung enthält, auf das saugfähige Material auf.

Die Kobaltsalzlösung kann mit Hilfe eines jeglichen hierzu geeigneten Gerätes, wie z. B. eines Rollensignierers, einer Siebdruckmaschine, vorzugsweise mit Hilfe eines Tintenstrahldruckers, auf das saugfähige Material aufgebracht werden.

Saugfähige Materialien, die mit Hilfe des erfindungsgemäßen Verfahrens gekennzeichnet werden können, sind z. B. Sintermetalle, Steine, Tonerzeugnisse und Keramik.

Das erfindungsgemäße Verfahren ist insbesondere geeignet, um ein keramisches Material mit einer thermisch stabilen Farbe zu kennzeichnen. Vorzugsweise läßt sich das erfindungsgemäße Verfahren zur Kennzeichnung von Stückgütern aus saugfähigem Material mit einer thermisch stabilen Farbe anwenden.

Die thermische Nachbehandlung der erfindungsgemäß aufgebrachten Kennzeichnung erfolgt z. B. durch Brennen oder Calcinieren oberhalb einer Temperatur von 400 °C, wobei die erfindungsgemäß eingesetzten Kobaltsalze und Kupfersalze in ihre entsprechenden Oxide umgewandelt werden.

Die Erfindung wird durch das folgende Beispiel näher erläutert:

Beispiel

200 g Kobaltacetat und 30 g Kupferacetat werden in 1,0 1 Wasser gelöst. Diese Lösung wird in einem handelsüblichen "ink-jet"-Gerät (Tintenstrahldrucker) eingesetzt.

Gekennzeichnet werden Wabenkörper, die überwiegend aus Titandioxid bestehen und als Katalysatoren zur Entfernung von Stickoxiden aus Rauchgasen eingesetzt werden, im laufenden Fertigungsprozeß, und zwar nach der Trocknung vor der Brennstufe.

Es wird sofort eine gut lesbare Beschriftung erhalten.

Bei den nachfolgenden Verfahrensschritten der Fertigung einschließlich des Brennens oberhalb 450 °C bleibt die Kennzeichnung erhalten.

Da die Farbe in die Matrix eingezogen ist, bleibt die Kennzeichnung auch während des Betriebes unter erodierenden Bedingungen, d. h. Abtragen der Oberfläche, bestehen.

## Ansprüche

1. Verfahren zur Kennzeichnung von saugfähigem Material mit einer thermisch stabilen Farbe, dadurch gekennzeichnet, daß man eine Kobaltsalzlösung auf das saugfähige Material aufbringt und die so aufgebrachte Kennzeichnung durch eine thermische Nachbehandlung bei Temperaturen von größer als 400 °C stabilisiert.

2. Verfahren nach Anspruch 1, dadurch gekennzeichnet, daß man eine Kobaltsalzlösung, die zusätzlich Kupfersalz enthält, auf das saugfähige Material aufbringt.

3. Verfahren nach den Ansprüchen 1 und 2, dadurch gekennzeichnet, daß man eine wäßrige Kobaltsalzlösung auf das saugfähige Material aufbringt.

4. Verfahren nach den Ansprüchen 1 bis 3, dadurch gekennzeichnet, daß man eine Kobaltsalzlösung, die zusätzlich einen Stoff zur Viskositätserhöhung der Lösung enthält, auf das saugfähige Material aufbringt.

5. Verfahren nach Anspruch 4, dadurch gekennzeichnet, daß man eine Kobaltsalzlösung, die zusätzlich Methylcellulose enthält, auf das saugfähige Material aufbringt.

6. Verfahren nach den Ansprüchen 1 bis 5, dadurch gekennzeichnet, daß man eine Kobaltsalzlösung mit Hilfe eines Tintenstrahldruckers auf das saugfähige Material aufbringt.

7. Verfahren nach den Ansprüchen 1 bis 6, dadurch gekennzeichnet, daß man eine Kobaltsalzlösung auf ein keramisches Material aufbringt.

8. Verfahren nach den Ansprüchen 1 bis 7, dadurch gekennzeichnet, daß man eine Kobaltsalzlösung auf Stückgüter aus saugfähigem Material aufbringt.

9. Verwendung einer Kobaltsalzlösung nach den Ansprüchen 1 bis 5 als thermisch stabile Farbe zur Kennzeichnung von saugfähigem Material.